Europäisches Patentamt

European Patent Office

Office européen des brevets

(11) Numéro de publication: **0 246 119 B1**

(12) **FASCICULE DE BREVET EUROPEEN**

(45) Date de publication de fascicule du brevet: **10.06.92** (51) Int. Cl.⁵: **G06F 1/00**

(21) Numéro de dépôt: **87400489.8**

(22) Date de dépôt: **05.03.87**

(54) **Système optionnel de protection de l'accès à un ordinateur.**

(30) Priorité: **20.03.86 FR 8603978**

(43) Date de publication de la demande:
**19.11.87 Bulletin 87/47**

(45) Mention de la délivrance du brevet:
**10.06.92 Bulletin 92/24**

(84) Etats contractants désignés:
**DE ES GB IT NL SE**

(56) Documents cités:
**EP-A- 0 089 876       EP-A- 0 131 421
EP-A- 0 157 303       DE-A- 3 342 651
FR-A- 2 546 646       US-A- 4 471 163**

**IBM TECHNICAL DISCLOSURE BULLETIN, vol.
16, no. 7, décembre 1973, pages 2312-2314,
New York, US; G.F. NIELSEN: "Remote terminal - computer communication security system"**

**IBM TECHNICAL DISCLOSURE BULLETIN, vol.
27, no. 7A, décembre 1984, pages 3903,3904,
New York, US; S.R. WHITE: "Method for creating many individually-distributable programs on a single diskette"**

**PATENT ABSTRACTS OF JAPAN, vol. 8, no.**

**163 (P-290)[1600], 27 juillet 1984; & JP-A-59
58 545 (FUJITSU K.K.) 04-04-1984**

(73) Titulaire: **BULL S.A.
121 avenue de Malakoff P.B. 193.16
F-75764 Paris Cédex 16(FR)**

(72) Inventeur: **Sarzotti, Alain
95, Cottages de Cernay la Ville
F-78720 Dampierre(FR)**
Inventeur: **Ballaud, Alain
9, Square Francis Poulenc
F-78120 Rambouillet(FR)**

**EP 0 246 119 B1**

**Description**

La présente invention concerne un système optionnel de protection de l'accès à un système de traitement de l'information au moyen d'une carte d'identification intelligente, le procédé de protection de l'accès et l'utilisation du système de protection dans un procédé d'accès audit système de traitement de l'information.

Dans la bureautique et l'informatique distribuées, il peut être intéressant de pouvoir protéger l'accès à des microordinateurs, des stations, des terminaux ou des ordinateurs.

Il existe des dispositifs pour la sécurité de la transmission de signaux entre deux stations de traitement de l'information, mais ces dispositifs ne prennent pas en compte la protection du terminal ou de l'ordinateur luimême. Par ailleurs, il existe également dès moyens de verrouillage des ordinateurs à l'aide de clefs, par exemple qui, lorsque la clef n'est pas introduite dans la serrure, bloque la transmission des informations provenant du clavier. Ce genre de dispositif, s'il a le mérite d'exister, présente l'inconvénient d'être facilement fraudable et d'offrir une sécurité illusoire. Il est également connu par la demande de brevet PCT W081/01063 de protéger l'accès à un terminal au moyen d'une carte émettrice. Toutefois, cette protection est installée dès le départ mais le dispositif ne permet pas de déclencher la protection de façon optionnelle. Par ailleurs, le dispositif ne prévoit pas la vérification de l'habilitation du porteur de la carte émettrice à travailler avec le terminal, ce qui permet une fraude facile.

Il est également connu par le brevet français 2.546.646 un système pour permettre à des utilisateurs de cartes intelligentes d'exécuter des transactions si deux comparaisons sont couronnées de succès, une première effectuée dans la carte, une deuxième effectuée dans le terminal. Toutefois, un tel dispositif ou système correspond également à une protection installée dès le départ mais ne permet pas de déclencher la protection façon optionnelle.

Le brevet européen EP-A-0,089,876 enseigne un procédé et un dispositif permettant de contrôler la diffusion de programme. Dans ce but, les programmes sont livrés inexécutables et ne peuvent être exécutés que dans le cas où ils sont utilisés avec une carte intelligente. Ce document enseigne donc également l'utilisation possible d'une ressource logicielle uniquement en présence d'une carte et la possibilité de choisir des ressources logicielles différentes sous réserve qu'une clé de validation soit présente dans la carte. Ce document enseigne donc l'utilisation de façon optionnelle d'une ressource logicielle mais n'enseigne pas de déclencher la protection de façon optionnelle. Les programmes sont par construction rendus inexécutables.

Un premier but de l'invention est de proposer à un système de protection de l'accès à un ordinateur qui soit à la fois plus fiable et difficilement fraudable et qui permette de mettre en oeuvre de façon optionnelle la protection.

Ce premier but est atteint par le fait que le système optionnel de protection de l'accès à un système de traitement de l'information au moyen d'une carte d'identification intelligente est caractérisé en ce qu'il comprend un premier dispositif offrant de façon optionnelle la possibilité à l'utilisateur de déclencher la protection de l'accès au système de traitement de l'information et dans le cas de la sélection de cette option actionnant un deuxième dispositif ne permettant le travail avec au moins une ressource principale du système de traitement d'information qu'en présence de ladite carte, en ce que le travail avec au moins une ressource principale est possible sans carte tant que ladite possibilité de déclencher l'option de protection offerte par le premier dispositif n'a pas été sélectionnée, et en ce que, dès que l'option de protection a été déclenchée une fois, aucun retour à la condition non sélectionnée n'est possible sans reconditionnement du système.

Selon une autre caractéristique, la ressource principale est le clavier et l'entrée des données en provenance du clavier est bloquée en absence de la carte.

Selon une autre caractéristique, la ressource principale est un disque magnétique et la lecture du secteur directeur du disque est rendue impossible sans une clé de décryptage fournie par la carte.

Selon une autre caractéristique, le processeur de l'ordinateur est associé :

avec des premiers moyens de mémorisation contenant deux programmes de base du système entrée-sortie (BIOS),

un premier dit programme (BIOS 1) comprenant un procédé d'initialisation et de mise en oeuvre de la protection suite au choix de l'option de protection, et

un deuxième dit programme (BIOS 2) comprenant au moins un procédé d'accès aux ressources principales protégées et faisant appel à l'utilisation d'une carte d'identification intelligente (CB);

avec un second moyen de mémorisation (M), associé à une alimentation de sauvegarde et de protection et contenant une matrice de couples de valeurs rangés suivant une table d'index, couples de valeurs utilises dans le procédé d'accès machine du deuxième programme (BIOS 2) ; et

2

EP 0 246 119 B1

avec des moyens de sélectionner uniquement l'utilisation du deuxième programme (BIOS 2) après le choix de l'option protection.

Un deuxième but de l'invention est une méthode optionnelle de protection de l'accès à une machine qui soit économique, fiable et indépendant des caractéristiques propres de la machine et des ressources associées.

Ce but est atteint par le fait que la méthode de protection de l'accès au système de traitement de l' information au moyen d'une carte d'identification intelligente (C8), ledit système comportant un processeur-(1) associé à des premiers (22, 23) et seconds (M) moyens de mémorisation contenant au moins un premier (BIOS1) et second (BIOS2) programmes permettant la mise en oeuvre d'un procédé d'initialisation de protection et respectivement d'accès aux ressources principales protégées par l'utilisation de ladite carte (CB) est caractérisée en ce qu'elle consiste , en cas de la sélection de l'option de protection:

- à déclencher le premier programme (BIOS1) pour effectuer l'initialisation de la protection ; et
- à ne permettre l'accès aux ressources principales que par le lancement du deuxième programme (BIOS2), lorsque l'initialisation a été sélectionnée au cours de l'exécution du premier programme-(BIOS1); et
- à empêcher tout retour à la condition non sélectionnée sans réconditionnement du système.

Selon une autre particularité le procédé d'accès comporte les étapes suivantes :

a) contrôle de la présence de la carte (CB) ;

b) tirage aléatoire de deux nombres (dl,dm) parmi quatre possible par le deuxième programme (BIOS 2) ;

c) détermination à partir des deux nombres (dl,dm) et des index associés, des adresses d'un couple de valeur (Ei, Ki) rangé dans le second moyen de mémorisation ; -

d) envoi d'une première valeur (Ei) du couple (Ei, Ki) vers la carte (CB) ;

e) calcul par la carte (CB) d'une valeur $K'i = f (Ei, Nj, S)$ ;

f) envoi de la valeur (K'i) calculée par la carte (CB) vers l'ordinateur pour comparaison avec la deuxième valeur (Ki) du couple ;

g) arrêt du programme du procédé d'accès machine et blocage de la machine en cas de non concordance des valeurs comparées (Ki) et (K'i).

Selon une autre particularité, le procédé d'accès du disque contenu par le deuxième programme (BIOS 2) est exécuté que dans le cas où les valeurs comparées (Ki) et (K'i) concordent.

Selon une autre particularité, le procédé d'accès du disque comporte notamment le décryptage du secteur directeur encrypté (s) du disque, décryptage qui ne peut être mis en oeuvre qu'après fourniture par la carte (CB) d'une clé de décryptage (Ci).

Un troisième but de l'invention est de proposer un procédé d'initialisation de la protection.

Ce troisième but est atteint par le fait que le procédé d'initialisation de la protection comporte les étapes suivantes :

- vérification de la présence des ressources matérielles constituées par la carte d'identification (CB), une carte électronique (EL) et son connecteur (CO) et la carte d'interface (I) ;
- entrée par l'opérateur au clavier (10) du nombre d'identification (Nj) ;
- tirage aléatoire effectué par le premier programme (BIOS 1) d'une première valeur (Ei) et envoi de cette valeur (Ei) à la carte d'identification (CB) ;
- mémorisation de la première valeur (Ei) dans le second moyen de mémorisation M ;
- calcul par la carte d'identification valeur (CB) d'une deuxième valeur (Ki) telle que $Ki = f (Ei, Nj, S)$ ;
- envoi de la deuxième valeur (Ki) vers le second moyen de mémorisation (M) et rangement dans ce second moyen de mémorisation ;
- mise en oeuvre du procédé d'encryptage du disque (PED) ;
- confirmation du choix de l'option de protection ;
- verrouillage des moyens de sélectionner l'utilisation exclusive du deuxième programme (BIOS 2).

Selon une autre caractéristique, le procédé d'encryptage du disque comporte les étapes suivantes :

- calcul par la carte d'identification (CB) d'un coefficient (Ci) tel que $Ci = f (C, Nj, S)$, (C) étant un nombre contenu dans la carte (CB) ;
- envoi du coefficient (Ci) au premier programme (BIOS 1) ;
- calcul par le premier programme (BIOS 1) contenant la fonction g d'encryptage des valeurs encryptées (s) du secteur directeur du disque à partir des valeurs non encryptées (s) de ce secteur directeur par la formule $s = g (Ci, s)$.

Selon une autre particularité, le procédé d'accès comprend entre les e'tapes a et b une étape d'introduction au clavier (10) par le porteur de la carte d'identification (CB) d'un nombre Nj d'identification et de comparaison avec le nombre Nj de la carte (CB).

3

D'autres caractéristiques et avantages de la présente invention apparaîtront plus clairement à la lecture de la description ci-après faite en référence aux dessins annexés dans lesquels :

La figure 1 représente une vue schématique d'ensemble du système de protection selon l'invention ;

La figure 2 représente une vue détaillée des modifications apportées à la carte processeur du système de protection ;

La figure 3 représente l'organigramme du procédé d'initialisation de mise en oeuvre de la protection ;

La figure 4 représente l'organigramme du procédé d'accès machine et procédé d'accès disque.

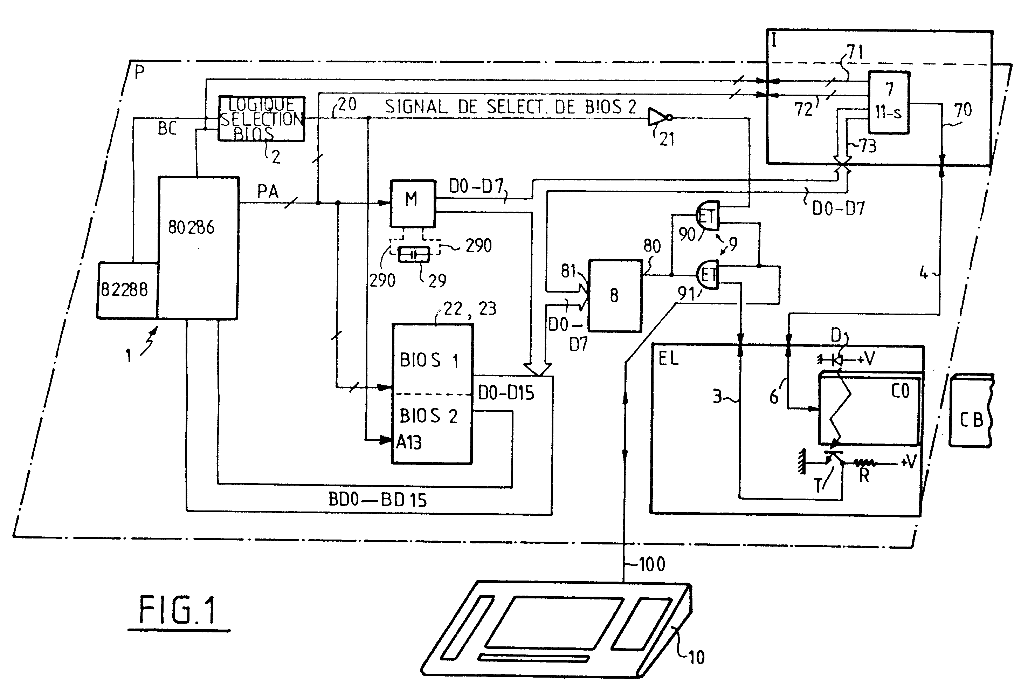

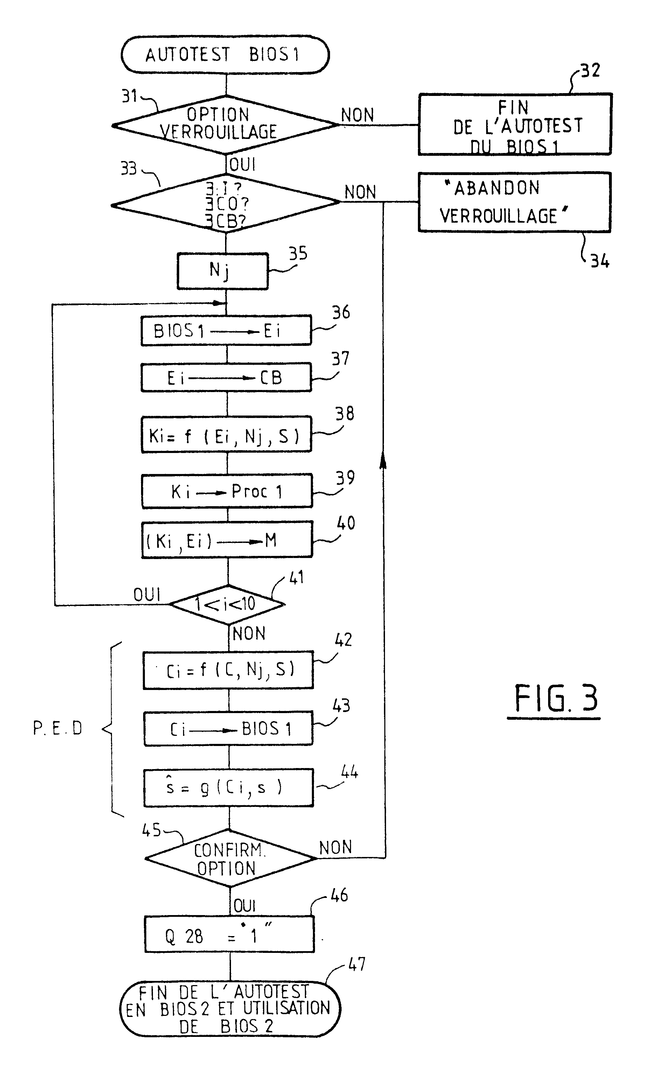

La carte processeur (P) d'un ordinateur ou micro-ordinateur ou terminal ou station de bureautique se trouve comme représentée dans la figure 1 reliée par des connecteurs appropriés non représentés à une carte d'interface (I). Cette carte d'interface (I) est elle-même reliée par des connecteurs appropriés non représentés à une carte électronique (EL) comportant une électronique de mise à niveau des signaux délivrés par une carte d'identité intelligente (CB) à un connecteur (CO) porté par la carte électronique (EL). Cette carte électronique (EL) comporte également un dispositif de détection de la présence d'une carte d'identité, dispositif constitué d'une diode photo-émettrice (D) alimentée par une souce de tension ( + V). Un photo-transistor (T) relié par son émetteur à la masse et dont le collecteur est relié à une source de tension ( + V) au travers d'une résistance (R), délivre sur son collecteur le signal indiquant la présence ou absence de la carte. La diode (D) et le photo-transistor (T) sont disposés par rapport au connecteur (CO) de façon à ce que le trajet lumineux du rayon provenant de la diode (D) en direction du photo-transistor (T) soit interrompu par la carte losrque celle-ci est introduite dans le connecteur (CO). Le connecteur (CO) et l'électronique de la carte (EL) délivrent par la liaison série (6) et la liaison série (4) l'information en série fournie par la carte (CB) à la liaison d'entrée série 70 d'un circuit d'interface serie parallèle 7 relié par ses entrées et sorties parallèles (73) aux 8 bits de données de poids faible (DO, D7) du bus de données de la carte processeur. Le circuit d'interface série parallèle 7 est également relié de façon connue par l'homme de métier par les lignes (71) aux lignes du bus de contrôle du processeur (1) nécessaire à son fonctionnement et par les lignes (72) aux lignes d'adresses du bus d'adresses (PA) du processeur (1), nécessaires à la sélection des registres internes du circuit (7) et à la programmation de ce circuit (7). Le clavier (10) est relié par une liaison série bi-directionnelle (100) à un circuit (9) de verrouillage du clavier. Ce circuit (9) est constitué d'une porte ET (91) a' deux entrées dont une première entrée reçoit la liaison série bi-directionnelle (100) provenant du clavier et la deuxième entrée est reliée par l'intermédiaire d'un connecteur non représenté à la ligne (3) de la carte (EL) fournissant le signal d'indication de présence de la carte d'identité (CB). Par conséquent lorsque la carte (CB) est présente dans le connecteur (C0) le signal délivré par la ligne 3 est actif (au niveau logique 1) et la sortie de la porte ET (91) délivre un signal reproduisant le signal transmis par la liaison série (100). Ce signal est envoyé sur l'entrée série (80) d'un port (8) d'entrée série parallèle dont les sorties parallèles (81) sont reliées aux huit lignes de poids faible (D0 à D7) du bus de données de la carte processeur (P). Une deuxième porte ET (90) à deux entrées, du circuit de verrou clavier (9), reçoit sur sa première entrée le signal fourni par la liaison série bi-directionnelle (100) et sur sa deuxième entrée le signal délivré par la sortie d'un inverseur (21) dont l'entrée est branchée à la ligne 20 qui transmet le signal de sortie d'un circuit logique de sélection des différents programmes de base du système d'entrée sortie (BIOS 1), (BIOS 2). Cette ligne 20 est au niveau logique "1" lorsque l'on souhaite sélectionner un deuxième programme de base du système d'entrée sortie (BIOS 2). Dans ce cas la sortie de l'inverseur (21) est au niveau logique "0" et la sortie de la porte ET (90) qui est reliée à l'entrée série du port (8) ne transmet pas les signaux provenant du clavier (10). Dans le cas où le signal transmis par la ligne 20 est niveau "0", ce signal indiquant que l'on n'a pas sélectionné le deuxième programme (BIOS 2), la sortie de l'inverseur (21) est au niveau "1" et la sortie de la porte ET (90) reproduira le signal transmis par la liaison (100) provenant du clavier (10). Le processeur (1) de la carte processeur (P), dans l'exemple de réalisation représenté, est constitué par un processeur commercialisé par la firme INTEL sous la référence 80 286 et le boitier associé 82 288. Il est bien évident que ce processeur pourait être remplacé par tout autre proceseur équivalent. Sur la carte processeur on n'a pas figuré les éléments nécessaires à la constitution d'un micro ordinateur tel que l'interface de liaison avec une unité de lecture d'un disque magnétique ou de disquettes souples, les liaisons avec les mémoires vives de stockage des programmes d'application, etc... Seuls les éléments indispensables à la compréhension de l'invention et impliquant des modifications par rapport à une carte processeur classique ont été représentés et seront décrits. Des premiers moyens de mémorisation constitués par une mémoire constituée de deux boitiers (22) (23) de capacité suffisante pour contenir deux programmes de base du système d'entrée sortie est reliée d'une part au bus d'adresse (PA) du processeur (1), d'autre part au bus de données (BD0 à BD15) de la carte processeur. Le premier programme (BIOS 1) comporte un programme de base du système d'entrée sortie standard auquel on a ajouté les instructions permettant de mettre en oeuvre le procédé de mise en oeuvre et d'initialisation de la protection, dont l'organigramme est représenté sur la figure 3. Le deuxième programme (BIOS 2) comporte en plus du programme standard d'entrée sortie, les instructions permettant de mettre en oeuvre le procédé d'accès machine (P.A.M.) et le procédé d'accès disque (P.A.D.). Ces programmes sont exécutés comme pour un programme (BIOS) standard par le processeur 1. La sélection entre le premier programme (BIOS 1) et le deuxième programme (BIOS 2) nécessitant obligatoirement l'utilisation de la carte intelligente (CB) est faite à l'aide de la ligne 20 qui est envoyée sur l'entrée (A13) des boitiers de mémoire morte ROM (22, 23). Le signal de sélection arrivant sur l'entrée (A13) des boitiers de mémoire morte (22, 23) valide la moitié de la capacité des premiers moyens de mémorisation moitié dans laquelle réside le programme (BIOS 2). Le système de protection comporte également un second moyen de mémorisation confidentiel (M) qui est relié au bus d'adresses (PA) d'une part, et d'autre part aux 8 bits de poids faible (DO D7) du bus de données (BD0 BD15). cette mémoire vive (M) possède sa propre alimentation (29) de façon à éviter la perte des informations, suite à une panne de courant et à éviter également la lecture des informations contenues par cette mémoire. En effet dans le cas d'une tentative de lecture il sera nécessaire de débrancher la mémoire de la carte et par conséquent de rompre les liaisons (290) avec son alimentation (29). Ceci entrainera automatiquement la perte de l'information contenue dans cette mémoire vive (M). Cette mémoire (M) contient un ensemble de couples de valeurs (Ki, Ei) utilisés par le deuxième programme (BIOS 2). Ces couples de valeurs sont rangés dans cette mémoire à des adresses définies par une table d'index également contenue par cette mémoire (M). La source d'alimentation de cette mémoire (29) peut être contituée par une batterie ou un condensateur de très forte capacité. A titre d'ordre de grandeur la capacité de cette mémoire peut être de 128 Octets.

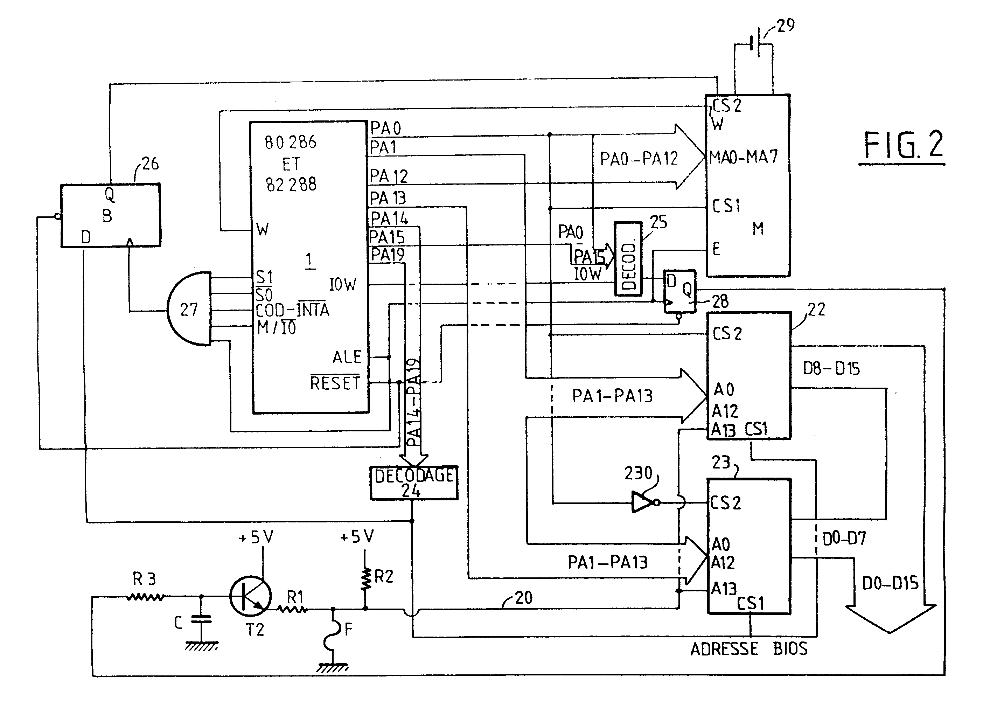

La figure 2 montre en détail la sélection entre les différents programmes résidant dans premiers moyens de mémorisation constitués par les boitiers de mémoire morte (22 23) et les circuits qui permettent d'accéder à la mémoire (M) que par une instruction provenant des programmes (BIOS). Les boitiers de mémoire morte (22, 23) sont adressés sur leurs entrées (A0 A12) par les lignes d'adresses (PA1 à PA13) du bus d'adresses du processeur. La sélection entre le boitier (22) et le boitier (23) est effectuée par la ligne d'adresse (PA0) laquelle est envoyée sur une deuxième entrée de sélection (CS2) du boitier (22). Cette même ligne d'adresses (PA0) est également envoyée par l'intermédiaire de l'inverseur (230) à la deuxième entrée (CS2) du boitier (23). La première entrée de sélection (CS1) du boitier (23) reçoit la sortie d'un circuit (34) de décodage lequel reçoit sur ses entrées les lignes d'adresses (PA14 à PA19) du bus d'adresses du processeur. Ce boitier (24) par décodage de ses lignes d'adresses (PA14 à PA19) active son signal de sortie lorsque le décodage indique un adressage des programmes (BIOS). La sortie du boitier (24) est également reliée à la première entrée de sélection (CS1) de la mémoire morte (22). Le boitier (23) sert à délivrer les bits de données de poids faible (D0 à D7) tandis que le boitier (22) sert à délivrer les bits de données de poids élevé (D8 à D15) au bus de données de la carte processeur. Par conséquent la valeur logique du signal (PA0) permettra de déterminer l'octet de poids faible ou l'octet de poids élevé. L'entrée d'adresse (A13) de poids le plus élevé des boitiers de mémoire morte (22, 23) est reliée à la ligne (20) qui délivre le signal de sélection entre le premier programme (BIOS 1) et le deuxième programme (BIOS 2). Par conséquent suivant le niveau logique de cette ligne (20), on sélectionne une des deux pages de la mémoire consituée par les deux boitiers (22, 23) dont la sélection est commandée par (A13) et dans lesquelles on range les deux programmes. Lorsque (A13) est au niveau "1" on sélectionne la page contenant le programme (BIOS 2), cette page de la zone mémoire correspondant à l'occupation d'une partie du boitier (22) et une partie du boitier (23), par le programme (BIOS 2). Cette ligne (20) est reliée par une résistance (R2) à une source de tension de + 5 Volts et par un fusible (F) à la masse. Une résistance (R1) relie le point commun à la résistance (R2) et au fusible (F) à l'émetteur d'un transistor (T2) dont le collecteur est relié à une source de tension de + 5 volts. La base du transistor est reliée d'une part à la masse par un condensateur (C) d'autre part par une résistance (R3) à la sortie (Q) d'une bascule (28) de type (D). Cette bascule (28) reçoit sur son entrée d'horloge le signal (ALE) provenant du processeur (1) et sur son entrée (D) un signal provenant de la sortie d'un circuit décodeur (25). L'entrée de remise à "0" de cette bascule (28) est reliée au signal (RESET/) du processeur (A). Le décodeur (25) reçoit sur ses entrées les lignes d'adresses (PA0 à PA15) du bus d'adresse et le signal (IOW) provenant du processeur (1). Par conséquent lorsque le programme d'initialisation du verrouillage contenu, comme on le verra plus tard, dans le premier programme (BIOS 1) envoie une instruction d'écriture d'entrée sortie au processeur (1) avec une certaine combinaison des lignes d'adresse (PA0 à PA15), la sortie du décodeur (25) devient active. Par suite la sortie (Q) de la bascule (28) sera activée dès l'apparition du signal (ALE) de validation des adresses. L'activation de la sortie (Q) va provoquer la mise en conduction du transistor (T2) et le claquage du fusible (F). Ce fusible (F) étant grillé la ligne (20) sera positionnée au niveau logique "1" et le programme (BIOS 2) sera sélectionné dans les boitiers de mémoire (22, 23). Tant que la sortie (Q) n'est pas validée le transistor (T2) ne conduit pas et le fusible (F) positionne la ligne (20) au niveau logique "0". Ce qui sélectionne dans les boitiers de mémoire morte (22, 23) le premier programme (BIOS 1). Lors d'une réinitialisation du système le signal (RESET) maintient la bascule à "0" ce qui évite de provoquer de façon inadvertante la mise à "1" de la sortie (Q) de la bascule (28) et la fusion involontaire du fusible (F). Les résistances (R3) et le condensateur (C) jouent le rôle d'un filtre passe-bas qui empêche la transmission de signaux de transition qui pourrait se produire lors d'une réinitilisation du système. Ce n'est donc que, lorsque le signal (Q) sera corectement établi que le grillage du fusible (F) aura lieu.

La sélection de la mémoire (M) pour le chargement de celle-ci par le premier programme (BIOS 1) ou pour l'utilisation de ses informations par le deuxième progamme (BIOS 2) est réalisée de la façon décrite ci-après. La première entrée de sélection (S1) de la mémoire (M) reçoit la ligne d'adresse (PA0) du bus d'adresse du processeur (1). Les entrées (MAO à MA8) de la mémoire (M) reçoit 8 des lignes d'adresses (PAO à PA12) du bus d'adresse du processeur (1). Cette sélection sur les lignes d'adresses (PAO à PA12) permet ainsi d'effectuer un codage des adresses de la mémoire (M). L'entrée (W) de la mémoire (M) reçoit le signal de la sortie (W) du processeur (1) et ce signal (W) indique une écriture en mémoire. La deuxième entrée de sélection (CS2) de la mémoire (M) reçoit la sortie (Q) d'une bascule (26) de type (D) dont l'entrée de mise à "0" reçoit le signal (RESET/) du processeur (1). Cette bascule (26) reçoit sur son entrée (D) la sortie du circuit (24) de décodage indiquant l'adressage d'une instruction du BIOS. Cette bascule (26) reçoit sur son entrée d'horloge la sortie d'une porte ET (27) à cinq entrées, dont les entrées sont reliées respectivement aux sorties (S1, SO/, COD-INTA/, M/IO/ et ALE). L'ensemble de ces sorties au niveau "1" indique que le processeur effectue une lecture d'un code instruction. Il est bien évident que dans le cas d'un autre processeur on pourra facilement remplacer ces signaux par les signaux équivalents, qui indiquent la lecture d'un code d'instruction par le processeur. Donc à chaque fois qu'une instruction réside dans la mémoire morte (BIOS) l'entrée (D) de la bascule (26) est au niveau logique "1" et lorsque le processeur (1) effectue la lecture du code instruction, la sortie de la porte ET passe également du niveau logique "0" au niveau logique "1". Par conséquent la sortie (Q) de la bascule (26) passe au niveau logique "1", et sélectionne la mémoire (M). On peut donc accéder à la mémoire (M) uniquement lorsqu'on lit une instruction rangée dans la mémoire morte contenant les programmes (BIOS) et lorsque l'adresse de l'instruction correspond aux adresses de la méoire (M). De façon à verrouiller l'accès à la mémoire (M) les programmes rangés dans les mémoires mortes (22,23) n'auront pas de structure de sous programme c'est-à-dire ne comporteront pas la présence d'instruction "RETURN" et n'utiliseront pas la mémoire vive (non représentée) du processeur comme élément de stockage d'informations. Cette mémoire (M) contient un ensemble de couples de valeurs (Ei, Kj) rangés à des adresses déterminées par une table d'index. Cette table d'index est elle-même rangée dans la mémoire (M) à des adresses déterminées par les couples (dl, dm) des numéros de ligne.

Le procédé de mise en oeuvre et d'initialisation du verrouillage va être maintenant décrit en liaison avec la figure 3.

Dans la partie auto-test du programme (BIOS) standard on trouve une étape (31) dans laquelle on demande à l'opérateur s'il veut déclencher l'option de verrouillage ou non. Dans le cas où l'opérateur ne souhaite pas déclencher l'option le programme se poursuit à l'étape (32) qui est la fin de l'auto-test normal d'un programme (BIOS) standard. Si l'opérateur sélectionne l'option de verrouillage le programme se poursuit par l'étape (33) constituée par un test de vérification de lu présence des ressources matérielles nécessaires au verrouillage c'est-à-dire par la présence de la carte interface, de la carte électronique, du connecteur (CO) et la présence d'une carte intelligente (CB) pourvue d'un processeur et d'une mémoire. Si le test est négatif le programme se poursuit par un message et la procédure de verrouillage est abandonnée comme représentée par l'étape (34) de l'organigramme de la figure 3. Dans le cas de la présence des ressources matérielles le programme se poursuit par les étapes conversationnelles suivantes.

L'étape (34) demande à l'opérateur un code (Nj) spécifique à la machine ou à l'utilisateur puis le premier programme (BIOS 1) procéde à un tirage aléatoire permettant de déterminer un nombre (Ei) de 16 bits. Ce tirage aléatoire est représenté par l'étape (36). A l'étape (37) le nombre (Ei) est mémorisé dans un registre du processeur (1) et envoyé à la carte (CB) pour l'exécution de l'étape (38). L'étape (38) consiste en un calcul effectué par la carte (CB), ce calcul permettant de déterminer un coefficient (Ki) tel que (Ki) = f (Ei, Nj, S). Le nombre (S) est un nombre secret contenu par la carte et inaccessible de l'extérieur, (f) est la fonction secrète réalisée par le cablage de la carte, et (Nj) est le code spécifique à la machine déjà mémorisé dans la carte. L'étape (39) consiste à envoyer le (Ki) calculé vers le processeur (1). A l'étape (40), la clef (Ei) déterminée par le (BIOS) et la clef (Ki) calculée par la carte sont rangées dans la mémoire confidentielle (M) à une adresse déterminée par la table d'index en fonction du tirage aléatoire de deux valeurs (di, dj) parmi quatre, comme on le verra par la suite. Après le rangement on poursuit par une étape (41) qui consiste en un test sur la valeur (i) pour savoir si le nombre de couples calculé est inférieur à une certaine valeur (N). Dans l'exemple de réalisation choisi on prendra pour valeur (N = 10). Tant que (i) est compris entre 1 et 10 on réitère les étapes (35 à 41) et dès que (i) dépasse la valeur 10 on poursuit par le procédé d'encryptage du disque (PED). Ce procédé commence par un calcul effectué par la carte (CB) pour déterminer une clef (Ci) telle que (Ci) = f (C, Nj S). (C) étant une valeur de codage contenue par la carte (CB). L'étape suivante (43) consiste à envoyer la valeur (Ci) calculée au (BIOS 1). Ensuite le (BIOS 1) passe à l'étape (44) qui consiste à encrypter les données (s) du secteur directeur du disque. Ces données sont encryptées par une fonction (g) présente dans le premier programme (BIOS 1), telle que $\hat{s}$ = g (Ci, s), (s) représentant les données non encryptées du secteur directeur du disque, ($\hat{s}$) les données encryptées du secteur directeur du disque et (g) la fonction d'encryptage réalisée par le programme (BIOS 1). Le procédé de mise en oeuvre et de verrouillage se poursuit par une étape (45) demandant confirmation de l'option de verrouillage avant l'exécution de l'étape (46) qui réalise le grillage du fusible (F) par une instruction d'écriture en entrée et sortie définie par les adresses convenant au décodeur (25). Cette étape (46) fait disparaitre (BIOS1) au profit de (BIOS 2) et par la suite la fin de l'auto-test qui avait démarré dans le (BIOS 1) se poursuit à l'étape (47) dans le (BIOS 2). Ensuite à chaque mise en route du système, le programme (BIOS 2) est exécuté. Aucun retour à BIOS 1 n'est possible sans reconditionnement de la machine.

Le procédé de rangement des couples (Ki, Ei) dans la mémoire (M) ainsi que la table d'index contenue par cette mémoire va maintenant être décrit.

Dans la mesure où le passage des informations devient invariant entre le processeur, la mémoire (M) et le connecteur (C0), il est toujours possible de détecter la valeur des clefs avec un appareil de mesure connecté sur le bus ou la carte série. Il est alors prévu de mettre en oeuvre un algorithme dont le principe est le suivant : assurer des calculs de clefs différentes à partir d'un tirage aléatoire restreint à un champ de valeur. Pour une machine donnée (identifiée par le code immatriculation Nj), il est possible de précalculer plusieurs clefs à partir d'une série aléatoire. Soit une dizaine de couples Kij et Eij (i = 1 à 10). Les dispositions sont alors les suivantes :

1. Les Kij sont rangés dans la mémoire M, avec les Eij. Une table de chiffrement est ainsi formée avec une dizaine de couples.

2. Le mode de rangement réalisé par le premier programme (BIOS 1) correspond à une matrice singulière dit MIP (Matrice d'Identification des parités) dont la propriété est de retrouver n'importe quel couple d'éléments à partir des numéros de lignes contenant ces éléments.

Un exemple de modèle MIP connu à repérage mnémotechnique est le suivant :

|     | 0 | 32 | 64 | 96 | 128 | 160 |
|-----|---|----|----|----|-----|-----|
| d1  | M | U  | T  | U̇  | S   |     |
| d2  | N | O  | M  | E  | N   |     |
| d3  | D | E  | D  | I  | T   |     |
| d4  | C | O  | C  | I  | S   |     |

La désignation est biunivoque entre les couples (dl, dm) $1 \leq 1 \leq 4$ ; $1 \leq m \leq 4$ des numéros de lignes et les éléments. De cette matrice on en déduit la table suivante des index associés en couple de valeurs (dl, dm) de numéro de lignes. La table peut-être réduite à 10 éléments.

7

| N° DE LIGNE --- MIP | INDEX DES ELEMENTS |
|---|---|
| d1d1 ---- UU | d1 + 32, d1 + 96 |
| d1d2 ---- MM | d1 + 0, d2 + 64 |
| d1d3 ---- TT | d1 + 64, d3 + 128 |
| d1d4 ---- SS | d1 + 128, d4 + 128 |
| d2d2 ---- NN | d2 + 0, d2 + 128 |
| d2d1 ---- MM | d2 + 64, d1 + 0 |
| d2d3 ---- EE | d2 + 96, d3 + 32 |
| d2d4 ---- 00 | d2 + 32, d4 + 32 |
| d3d1 ---- TT | d3 + 128, d1 + 64 |
| d3d2 ---- EE | d3 + 32, d2 + 96 |
| d3d3 ---- DD | d3 + 0, d3 + 64 |
| d3d4 ---- II | d3 + 96, d4 + 96 |
| d4d1 ---- SS | d4 + 128, d1 + 128 |
| d4d2 ---- 00 | d4 + 32, d2 + 32 |
| d4d3 ---- II | d4 + 96, d3 + 96 |
| d4d4 ---- CC | d4 + 0, d4 + 64 |

Cette propriété permet de prévoir par le premier programme (BIOS1) un rangement des clés Kij et Eij associées dans la mémoire (M) (inaccessible par la RAM) tel que le deuxième programme (BIOS2) sait retrouver les couples par les seuls numéros de ligne de la matrice, tirés aléatoirement sans connaitre la disposition des éléments dans la matrice.

Voici à titre d'exemple une matrice contenant les valeurs Ki et Ei rangées selon la méthode ci-dessus.

| | | | | | |
|---|---|---|---|---|---|
| d1 | K1 | K2 | K3 | E2 | K4 |
| d2 | K5 | K6 | E1 | K7 | E5 |
| d3 | K8 | E7 | E8 | K9 | E3 |
| d4 | K10 | E6 | E10 | E9 | E4 |

L'initialisation est alors faite de la façon suivante par le BIOS :

● les numéros de lignes sont tirés aléatoirement par BIOS (ex. d2d3) pour ranger dans les registres le couple Kij et Eij correspondant (ex. K7, E7) à partir des clés et index (d2 + 96, d3 + 32) inconnus de BIOS.

● le rangement suivant sera effectué par un autre tirage d'un couple de numéro de ligne... etc.

En conclusion, le rangement est généré :

- sans identification explicite des adresses d'éléments (les valeurs de décalage sont dans la table MIP de M),

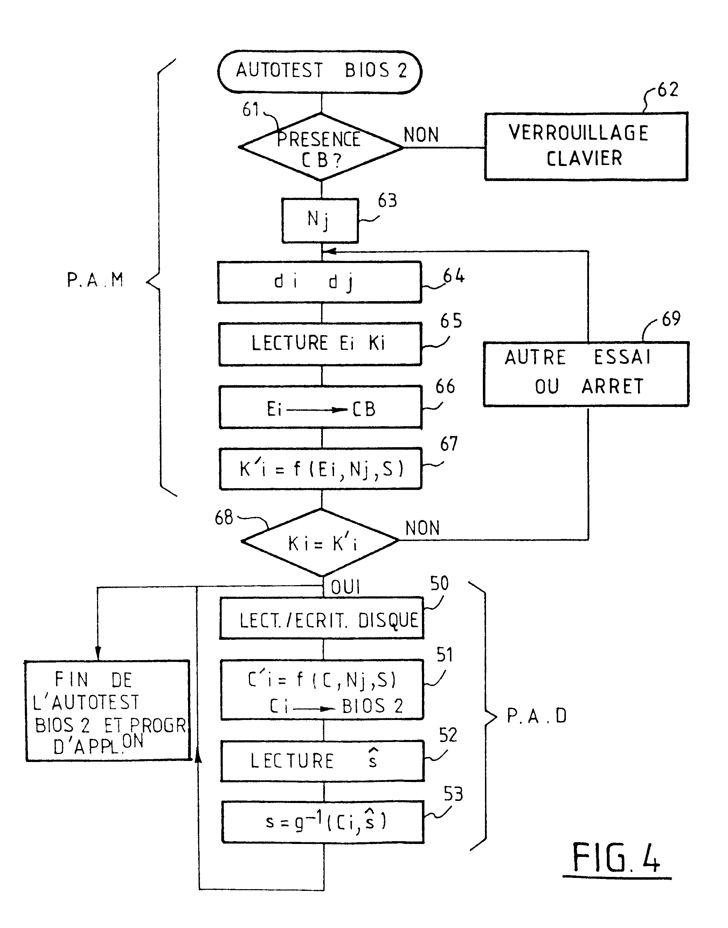

- avec possibilité de modification de la table MIP soit dans sa structure (le BIOS ne modifie pas son système d'accès vers la table et seuls les index de MIP sont revus), soit dans son contenu (une initialisation assure un rafraichissement complet du contenu de la table à partir d'une carte bancaire à microprocesseur). L'organigramme de la figure 4 permet d'expliciter le procédé d'accès machine (PAM) et le procédé d'accès disque (PAD) dans le cas d'une machine verrouillée. Dans ce cas cette machine utilise uniquement le programme (BIOS2) et par conséquent pendant le déroulement de la partie autotest du programme (BIOS2) va se trouver exécutée l'étape (61) qui est constituée par un test de la présence d'une carte bancaire contenant la valeur (C), une valeur (Nj) et la valeur secrète (S). Dans le cas où la présence n'est pas détectée l'étape 62 de verrouillage du clavier est accomplie. Ces deux étapes 61 et 62 sont en fait réalisée par le dispositif diode (D) transistor (T), et la porte (ET-91) de la figure 1.(Dans le cas de la présence de la carte, l'opérateur introduit de façon optionnelle au clavier un nombre d'identification (Nj) et ce nombre est comparé a celui (Nj) contenu dans la carte et en cas de non coïncidence l'autotest est arrêté. Dans ce cas la machine devient inutilisable). En cas de détection de présence de la carte ou de coincidence dans la cas où l'option de comparaison, ci-dessus est choisie, on passe à l'étape (64) suivante qui est constituée par un tirage aléatoire de deux nombre parmi quatre. Ces deux nombres (dl, dm) tirés parmi les valeurs (d1 à d4) constituent un couple de numéros de ligne qui va permettre de déterminer par la mémoire (M) les valeurs d'index à ajouter respectivement à chacun de ces deux nombres pour déterminer les adresses dans lesquelles sont rangées les deux valeurs du couple (Ki, Ej) correspondant à ces deux nombres (dl, dm). Suite à cette détermination d'adresse, le programme (BIOS2) effectue la lecture du couple (Ei, Ki) contenu dans cette mémoire (M) et envoie la première valeur (Ei) à la carte bancaire (CB). Ceci est accompli au cours des étapes (65 et 66). Dans l'étape (67) du procédé la carte (CB) effectue le calcul d'une valeur (K'i) telle que $K'i = f(Ei, Nj, S)$. Cette valeur (K'i) est comparée au cours d'une étape (68), à la deuxième valeur du couple lu dans la mémoire (M), cette deuxième valeur étant la valeur Ki. Si il n'y a pas coïncidence on effectue un nouvel essai et au bout d'un certain nombre d'essais l'auto-test est arrêté, ceci est représenté par l'étape (69) de l'organigramme. Dans le cas où il y a coïncidence, on poursuit soit par la fin de l'autotest (BIOS2) et les programmes d'application qui suivent, soit dans le cas où une lecture/écriture du disque ou de la disquette est demandée par la procédure d'accès disque (PAD). Une étape (50) de lecture/écriture disque est toujours suivie d'une étape (51) du calcul de la valeur $Ci = f(C, Nj, S)$ par la carte (CB) et envoi de cette valeur (Ci) au (BIOS2). Cette étape est suivie par la lecture du secteur directeur du disque encrypté représenté par l'étape (52). Les valeurs $(\hat{s})$ du secteur encrypté sont ensuite décryptées au cours d'une étape 53 exécutée par le (BIOS2) à partir de la fonction $g^{-1}$ contenue dans ce (BIOS2) suivant la formule $s = g^{-1} (Ci, \hat{s})$. Par la suite, la fin de l'auto-test ou les programmes d'application sont exécutés normalement comme si la machine n'était pas protégée. Par conséquent par l'encryptage du secteur directeur du disque il est impossible de transférer, soit un disque dur, soit une disquette sur une autre machine non vérouillée et de lire les données si on ne possède pas la clé de cryptage du secteur directeur du disque dont une partie est fournie par la carte (CB) à microprocesseur. Par ailleurs, dans le cas où on ne possède pas non plus une carte du type précédent, le clavier est verouillé et on ne peut rentrer aucune commande vers la machine. Enfin, l'utilisation de deux programmes différents dont l'un ne peut être accédé qu'après une sélection irréversible (sauf par un service de maintenance) permet d'assurer une protection très efficace à l'accès des ordinateurs.

**Revendications**

1. Système optionnel de protection de l'accès à un système de traitement de l'information au moyen d'une carte d'identification intelligente (CB), caractérisé en ce qu'il comprend un premier dispositif offrant de façon optionnelle la possibilité à l'utilisateur de déclencher la protection de l'accès au système de traitement de l'information et dans le cas de la sélection de cette option actionnant un deuxième dispositif ne permettant le travail avec au moins une ressource principale du système de traitement de l'information qu'en présence de ladite carte (CB), en ce que le travail avec au moins une ressource principale du système de traitement de l'information (10) est possible sans carte tant que ladite possibilité de déclencher l'option de protection offerte par le premier dispositif n'a pas été sélectionnée, et en ce que, dès que l'option de protection a été déclenchée une fois, aucun retour à la condition non sélectionnée n'est possible sans reconditionnement du système.

2. Système selon la revendication 1, caractérisé en ce que la ressource principale est le clavier (10) et l'entrée des données en provenance du clavier (10) est bloquée en l'absence de la carte (CB).

3. Système selon la revendication 1, caractérisé en ce que la ressource principale est un lecteur de disque magnétique et la lecture du secteur directeur du disque (s) est rendue impossible sans une clé (Ci) de décryptage fournie par la carte (CB).

**4.** Système de protection selon l'une des revendications précédentes, caractérisé en ce que le processeur (1) de l'ordinateur est associé:

avec des premiers moyens de mémorisation (22,23) contenant deux programmes de base du système d'entrée/sortie (BIOS),

un premier dit programme (BIOS1) comprenant un procédé d'initialisation et de mise en oeuvre de la protection suite au choix de l'option de protection, et

un deuxième dit programme (BIOS2) comprenant au moins un procédé d'accès aux ressources principales protégées et faisant appel à l'utilisation d'une carte d'identification intelligente (CB);

avec un second moyen de mémorisation (M), associé à une alimentation (29) de sauvegarde et de protection et contenant une matrice de couples de valeur (Ei, Ki) rangés suivant une table d'index, couples de valeur utilisés dans le procédé d'accès machine du deuxième programme (BIOS2) ; et

avec des moyens (2,20,9) de sélectionner uniquement l'utilisation du deuxième programme (BIOS2), après le choix de l'option de protection.

**5.** Système selon la revendication 4, caractérise en ce que le circuit d'interface entre le bus du processeur (1) de l'ordinateur et le clavier (10) comporte des moyens (91) permettant, dans le cas du choix de l'option de protection, de bloquer la transmission des données venant du clavier (10) lorsqu'un signal indiquant la présence de la carte (CB) n'est pas actif.

**6.** Méthode optionnelle de protection de l'accès à un système de traitement de l' information au moyen d'une carte d'identification intelligente (CB), ledit système comportant un processeur (1) associé à des premier (22, 23) et second (M) moyens de mémorisation contenant au moins un premier (BIOS1) et second (BIOS2) programmes permettant la mise en oeuvre d'un procédé d'initialisation de protection et respectivement d'accès aux ressources principales protégées par l'utilisation de ladite carte (CB) caractérisée en ce qu'elle consiste, en cas de la sélection de l'option de protection :
- à déclencher le premier programme (BIOS1) pour effectuer l'initialisation de la protection ; et
- à ne permettre l'accès aux ressources principales que par le lancement du deuxième programme (BIOS2), lorsque l'initialisation a été sélectionnée au cours de l'exécution du premier programme- (BIOS1); et
- à empêcher tout retour à la condition non sélectionée sans reconditionnement du système.

**7.** Méthode selon la revendication 6 caracterisée en ce que le procédé d'accès comporte les étapes suivantes :
a) contrôle de la présence de la carte (CB) ;
b) tirage aléatoire de deux nombres (d1, dm) parmi quatre possible par le deuxième programme (BIOS 2) ;
c) détermination à partir des deux nombres (d1, dm) et des index associés, des adresses d'un couple de valeur (Ei, Ki) rangé dans le second moyen de mémorisation ;
d) envoi d'une première valeur (Ei) du couple (Ei, Ki) vers la carte (CB) ;
e) calcul par la carte (CB) d'une valeur K'i = f (Ei, Nj, S) ;
f) envoi de la valeur (K'i) calculée par la carte (CB) vers l'ordinateur pour comparaison avec la deuxième valeur (Ki) du couple ;
g) arrêt du programme du procédé d'accès machine et blocage de la machine en cas de non concordance des valeurs comparées (Ki, K'i).

**8.** Méthode selon la revendication 7, caractérisée en ce qu'elle consiste à exécuter un procédé d'accès du disque contenu par le deuxième programme (BIOS 2) que dans le cas où les valeurs comparées (Ki, K'i) concordent.

**9.** Méthode selon la revendication 8, caractérisée en ce que le procédé d'accès du disque comporte notamment le décryptage du secteur directeur encrypté (s) du disque, décryptage qui ne peut être mis en oeuvre qu'après fourniture par la carte (CB) d'une clé de décryptage (Ci).

**10.** Méthode selon la revendication 6, caractérisée en ce que le procédé d'initialisation de la protection comporte les étapes suivantes :
- vérification de la présence des ressources matérielles constituées par la carte d'identification (CB), une carte électronique (EL) et son connecteur (CO) et la carte d'interface (I) ;
- entrée par l'opérateur au clavier (10) du nombre d'identification (Nj) ;

- tirage aléatoire effectué par le premier programme (BIOS 1) d'unes première valeur (Ei) et envoi de cette valeur (Ei) à la carte d'identification (CB) ;
- mémorisation de la première valeur (Ei) dans le second moyen de mémorisation (M) ;
- calcul par la carte d'identification (CB) d'une deuxième valeur (Ki) telle que Ki = f (Ei, Nj, S) ;
- envoi de la deuxième valeur (Ki) vers le second moyen de mémorisation (M) et rangement dans ce second moyen de mémorisation ;
- mise en oeuvre du procédé d'encryptage du disque (PED) ;
- confirmation du choix de l'option de protection ;
- verrouillage des moyens de sélectionner l'utilisation exclusive du deuxième programme (BIOS 2).

11. Méthode selon la revendication 10, caractérisée en ce que le procédé d'encryptage du disque (PED) comporte les étapes suivantes :
- calcul par la carte d'identification (CB) d'un coefficient (Ci) tel que Ci = f (C, Nj, S), (C) étant un nombre contenu dans la carte (CB) ;
- envoi du coefficient (Ci) au premier programme (BIOS 1) ;
- calcul par le premier programme (BIOS 1) contenant la fonction g d'encryptage des valeurs encryptées (s) du secteur directeur du disque à partir des valeurs non encryptées (s) de ce secteur directeur par la formule s = g (Ci, s).

12. Méthode selon la revendication 7 caractérisée en ce que le procédé d'accès comprend entre les étapes a et b une étape d'introduction au clavier (10) par le porteur de la carte d'identification (CB) d'un nombre Nj d'identification et de comparaison avec le nombre Nj de la carte (CB).

## Claims

1. Optional system for the protection of access to a data processing system by means of an intelligent identification card (CB), characterised in that it comprises a first device offering the user in an optional manner the possibility of initiating the protection of access to the data processing system and, in the case of selection of this option, actuating a second device permitting operation with at least one main resource of the data processing system only in the presence of said card (CB), in that operation with at least one main resource of the data processing system (10) is possible without a card as long as said possibility of initiating the option of protection offered by the first device has not been selected, and in that, as soon as the option of protection has been initiated once, no return to the unselected condition is possible without reconditioning of the system.

2. System according to claim 1, characterised in that the main resource is the keyboard (10) and the entry of data coming from the keyboard (10) is inhibited in the absence of the card (CB).

3. System according to claim 1, characterised in that the main resource is a magnetic disc reader and reading of the manager sector of the disc (s) is rendered impossible without a decryption key (Ci) supplied by the card (CB).

4. Protection system according to any of the preceding claims, characterised in that the processor (1) of the computer is associated:
   with first storage means (22, 23) containing two basic input/output system (BIOS) programmes,
   a first so-called programme (BIOS 1) comprising a method for the initialisation and implementation of protection subsequent to choice of the option of protection, and
   a second so-called programme (BIOS 2) comprising at least one method of access to the protected main resources and calling for the use of an intelligent identification card (CB);
   with a second storage means (M), associated with a protective back-up power supply (29) and containing a matrix of pairs of values (Ei, Ki) filed according to an index table, which pairs of values are used in the machine access method of the second programme (BIOS 2); and
   with means (2, 20, 9) for selecting use of the second programme (BIOS 2) only, after choosing the option of protection.

5. System according to claim 4, characterised in that the interface circuit between the bus of the computer processor (1) and the keyboard (10) comprises means (91) making it possible, in the case of choice of the option of protection, to inhibit the transmission of data coming from the keyboard (10) when a signal indicating presence of the card (CB) is not active.

**6.** Optional method for the protection of access to a data processing system by means of an intelligent identification card (CB), said system comprising a processor (1) associated with first (22, 23) and second (M) storage means containing at least first (BIOS 1) and second (BIOS 2) programmes making it possible to implement a method for the initialisation of protection and respectively access to the protected main resources by use of said card (CB), characterised in that it consists, in the case of selection of the option of protection, of:
- initiating the first programme (BIOS 1) for carrying out initialisation of protection; and
- permitting access to the main resources only by starting of the second programme (BIOS 2), when initialisation has been selected in the course of running the first programme (BIOS 1); and
- preventing any return to the unselected condition without reconditioning of the system.

**7.** Method according to claim 6, characterised in that the access method comprises the following steps:
a) monitoring of the presence of the card (CB);
b) random drawing of two numbers (d1, dm) from among four possible ones by the second programme (BIOS 2);
c) determination from the two numbers (d1, dm) and from the associated indices, of the addresses of a pair of values (Ei, Ki) filed in the second storage means;
d) transmission of a first value (Ei) of the pair (Ei, Ki) to the card (CB);
e) calculation by the card (CB) of a value $K'i = f (Ei, Nj, S)$;
f) transmission of the value (K'i) calculated by the card (CB) to the computer for comparison with the second value (Ki) of the pair;
g) stopping of the programme of the machine access method and locking of the machine in case of non-matching of the values compared (Ki, K'i).

**8.** Method according to claim 7, characterised in that it consists of carrying out a method for access to the disc contained by the second programme (BIOS 2) only in the event that the values compared (Ki, K'i) match.

**9.** Method according to claim 8, characterised in that the method for access to the disc comprises in particular decryption of the encrypted manager sector (s) of the disc, which decryption can be carried out only after supply by the card (CB) of a decryption key (Ci).

**10.** Method according to claim 6, characterised in that the method for the initialisation of protection comprises the following steps:
- verification of the presence of the material resources formed by the identification card (CB), an electronic card (EL) and the connector thereof (CO) and the interface board (I);
- entry by the operator on the keyboard (10) of the identification number (Nj);
- random drawing carried out by the first programme (BIOS 1) of a first value (Ei) and transmission of this value (Ei) to the identification card (CB);
- storage of the first value (Ei) in the second storage means (M);
- calculation by the identification card (CB) of a second value (Ki) such that $Ki = f (Ei, Nj, S)$;
- transmission of the second value (Ki) to the second storage means (M) and filing in this second storage means;
- implementation of the method for encryption of the disc (PED);
- confirmation of choice of the option of protection;
- locking of the means for selecting exclusive use of the second programme (BIOS 2).

**11.** Method according to claim 10, characterised in that the method for encryption of the disc (PED) comprises the following steps:
- calculation by the identification card (CB) of a coefficient (Ci) such that $Ci = f (C, Nj, S)$, (C) being a number contained in the card (CB);
- transmission of the coefficient (Ci) to the first programme (BIOS 1);
- calculation by the first programme (BIOS 1) containing the encryption function g of the encrypted values (s) of the manager sector of the disc from the unencrypted values (s) of this manager sector by the formula $s = g (Ci, s)$.

EP 0 246 119 B1

**12.** Method according to claim 7, characterised in that the access method includes between steps a and b a step of input on the keyboard (10) by the bearer of the identification card (CB) of a number Nj for identification and comparison with the number Nj of the card (CB).

**Patentansprüche**

**1.** Wahlfreies Schutzsystem gegen den Zugriff auf ein Informationsverarbeitungssystem mittels einer intelligenten Identifizierungskarte (CB), dadurch gekennzeichnet, daß es eine erste Einrichtung umfaßt, die dem Benutzer die wahlfreie Möglichkeit bietet, den Schutz gegen den Zugriff auf das Informationsverarbeitungssystem auszulösen, und die im Falle der Wahl dieser Option eine zweite Einrichtung betätigt, die die Arbeit mit wenigstens einem Hauptbetriebsmittel des Informationsverarbeitungssystems nur bei Vorhandensein der Karte (CB) erlaubt, daß die Arbeit mit wenigstens einem Hauptbetriebsmittel des Informationsverarbeitungssystems (10) ohne Karte möglich ist, solange die Möglichkeit des Auslösens der von der ersten Einrichtung gebotenen Schutzoption nicht gewählt worden ist, und daß eine Rückkehr in den nicht gewählten Zustand ohne Zurücksetzen des Systems nicht möglich ist, sobald die Schutzoption einmal ausgelöst worden ist.

**2.** System gemäß Anspruch 1, dadurch gekennzeichnet, daß das Hauptbetriebsmittel die Tastatur (10) ist und daß die Eingabe von von der Tastatur (10) ausgehenden Daten bei Abwesenheit der Karte (CB) gesperrt wird.

**3.** System gemäß Anspruch 1, dadurch gekennzeichnet, daß das Hauptbetriebsmittel eine Magnetplatten-Leseinrichtung ist und daß das Lesen des Leitsektors der Platte (S) ohne einen von der Karte (CB) gelieferten Entschlüsselungs-Schlüssel (Ci) unmöglich ist.

**4.** Schutzsystem gemäß einem der vorangehenden Ansprüche, dadurch gekennzeichnet, daß der Prozessor (1) des Rechners verbunden ist:
mit ersten Speichermitteln (22, 23), die zwei Basisprogramme des Eingabe-/Ausgabesystems (BIOS) enthalten,
wobei ein sogenanntes erstes Programm (BIOS1) einen Prozeß für die Initialisierung und die Ausführung des Schutzes im Anschluß an die Wahl der Schutzoption umfaßt und
wobei ein sogenanntes zweites Programm (BIOS2) wenigstens einen Prozeß für den Zugriff auf die geschützten Hauptbetriebsmittel umfaßt und zur Benutzung einer intelligenten Identifizierungskarte (CB) auffordert;
mit einem zweiten Speichermittel (M), das mit einer Sicherungs- und Schutz-Versorgungseinrichtung (29) verbunden ist und eine Matrix von Wertepaaren (Ei, Ki) enthält, die in einer Indextabelle geordnet sind und im Prozeß für den Maschinenzugriff des zweiten Programms (BIOS2) verwendet werden; und
mit Mitteln (2, 20, 9) für die eindeutige Auswahl der Benutzung des zweiten Programms (BIOS2) nach der Wahl der Schutzoption.

**5.** System gemäß Anspruch 4, dadurch gekennzeichnet, daß die Schnittstellenschaltung zwischen dem Bus des Prozessors (1) des Rechners und der Tastatur (10) Mittel (91) umfaßt, die im Falle der Wahl der Schutzoption die Übertragung der von der Tastatur (10) kommenden Daten sperrt, wenn ein das Vorhandensein der Karte (CB) anzeigendes Signal nicht aktiv ist.

**6.** Wahlfreies Verfahren für den Schutz gegen den Zugriff auf ein Informationsverarbeitungssystem mittels einer intelligenten Identifizierungskarte (CB), wobei das System einen Prozessor (1) umfaßt, der mit ersten Speichermitteln (22, 23) und einem zweiten Speichermittel (M) verbunden ist, die wenigstens ein erstes (BIOS1) und ein zweites (BIOS2) Programm enthalten, die die Ausführung eines Prozesses für die Initialisierung des Schutzes bzw. für den Zugriff auf die geschützten Hauptbetriebsmittel durch die Benutzung der genannten Karte (CB) erlauben, dadurch gekennzeichnet, daß es im Falle der Wahl der Schutzoption umfaßt:
- Auslösen des ersten Programms (BIOS1) zum Ausführen der Initialisierung des Schutzes; und
- Erlauben des Zugriffs auf die Hauptbetriebsmittel nur durch die Freigabe des zweiten Programms (BIOS2), wenn die Initialisierung im Verlauf der Ausführung des ersten Programms (BIOS1) gewählt worden ist; und
- Verhindern jeglicher Rückkehr in den nicht gewählten Zustand ohne Zurücksetzen des Systems.

13

**7.** Verfahren gemäß Anspruch 6, dadurch gekennzeichnet, daß der Zugriffsprozeß die folgenden Schritte umfaßt:

a) Überprüfung des Vorhandenseins der Karte (CB);

b) zufälliges Ziehen zweier Zahlen (d1, dm) aus vier möglichen Zahlen durch das zweite Programm (BIOS2);

c) Bestimmung der Adressen eines im zweiten Speichermittel geordneten Wertepaares (Ei, Ki) anhand der zwei Zahlen (dl, dm) und der zugehörigen Indizes;

d) Senden eines ersten Wertes (Ei) des Paares (Ei, Ki) zur Karte (CB);

e) Berechnen eines Wertes K'i = f(Ei, Nj, S) durch die Karte (CB);

f) Senden des von der Karte (CB) berechneten Wertes (K'i) zum Rechner für den Vergleich mit dem zweiten Wert (Ki) des Paares;

g) Anhalten des Programms des Prozesses für den Maschinenzugriff und Sperren der Maschine im Falle der Nichtübereinstimmung der verglichenen Werte (Ki, K'i).

**8.** Verfahren gemäß Anspruch 7, dadurch gekennzeichnet, daß es die Ausführung eines Prozesses für den Zugriff auf die Platte, der im zweiten Programm (BIOS2) enthalten ist, nur in dem Fall umfaßt, in dem die verglichenen Werte (Ki, K'i) übereinstimmen.

**9.** Verfahren gemäß Anspruch 8, dadurch gekennzeichnet, daß der Prozeß für den Zugriff auf die Platte insbesondere die Entschlüsselung des verschlüsselten Leitsektors (S) der Platte umfaßt, wobei die Entschlüsselung nur nach der Lieferung eines Entschlüsselungs-Schlüssels (Ci) durch die Karte (CB) ausgeführt werden kann.

**10.** Verfahren gemäß Anspruch 6, dadurch gekennzeichnet, daß der Prozeß für die Initialisierung des Schutzes die folgenden Schritte umfaßt:

- Verifizierung des Vorhandenseins der materiellen Betriebsmittel, die von der Identifizierungskarte (CB), einer elektronischen Karte (EL) und ihrer Steckverbindung (CO) und der Schnittstellenkarte (I) gebildet werden;
- Eingabe der Identifizierungsnummer (Nj) durch die Bedienungsperson über die Tastatur (10);
- zufälliges Ziehen, ausgeführt vom ersten Programm (BIOS1), eines ersten Wertes (Ei) und Senden dieses Wertes (Ei) zur Identifizierungskarte (CB);
- Speichern des ersten Wertes (Ei) im zweiten Speichermittel (M);
- Berechnen eines zweiten Wertes (Ki) gemäß Ki = f(Ei, Nj, S) durch die Identifizierungskarte (CB);
- Senden des zweiten Wertes (Ki) an das zweite Speichermittel (M) und Anordnen desselben in diesem zweiten Speichermittel;
- Ausführen des Prozesses der Entschlüsselung der Platte (PED);
- Bestätigen der Wahl der Schutzoption;
- Sperren der Mittel für die Wahl der ausschließlichen Benutzung des zweiten Programms (BIOS2).

**11.** Verfahren gemäß Anspruch 10, dadurch gekennzeichnet, daß der Prozeß der Entschlüsselung der Platte (PED) die folgenden Schritte umfaßt:

- Berechnen eines Koeffizienten (Ci) gemäß Ci = f(C, Nj, S) durch die Identifizierungskarte (CB), wobei (C) eine in der Karte (CB) enthaltene Zahl ist;
- Senden des Koeffizienten (Ci) an das erste Programm (BIOS1);
- Berechnen der verschlüsselten Werte (s) des Leitsektors der Platte mittels des die Verschlüsselungsfunktion (g) enthaltenden ersten Programms (BIOS1) anhand der nicht verschlüsselten Werte (s) dieses Leitsektors durch die Formel s = g(Ci, s).

**12.** Verfahren gemäß Anspruch 7, dadurch gekennzeichnet, daß der Zugriffsprozeß zwischen den Schritten a und b einen Schritt der Eingabe einer Identifizierungsnummer Nj in die Tastatur (10) durch den Träger der Identifizierungskarte (CB) und des Vergleichs mit der Nummer (Nj) der Karte (CB) umfaßt.

FIG.1

FIG.2

EP 0 246 119 B1

EP 0 246 119 B1

FIG. 3

AUTOTEST BIOS 2

61 — PRESENCE CB ? — NON — 62 — VERROUILLAGE CLAVIER

63 — N j

P.A.M

64 — d i    d j

65 — LECTURE Ei Ki

66 — Ei ⟶ CB

67 — K'i = f (Ei, Nj, S)

69 — AUTRE ESSAI OU ARRET

68 — K i = K'i — NON

OUI

50 — LECT./ECRIT. DISQUE

FIN DE L'AUTOTEST BIOS 2 ET PROGR D'APPL. ON

51 — C'i = f (C, Nj, S)    Ci ⟶ BIOS 2

52 — LECTURE $\hat{s}$

53 — s = g$^{-1}$(Ci, $\hat{s}$)

P.A.D

FIG. 4